# EUROPEAN PATENT SPECIFICATION

(11) **EP 2 211 272 B1**
(45) Date of publication and mention of the grant of the patent: **28.09.2011**
(21) Application number: 10150757.2
(22) Date of filing: 14.01.2010
(51) Int. Cl.: G06F 13/38

(54) **Method and device for implementing USB endpoint multiplexing**
Verfahren und Vorrichtung zur Umsetzung von USB-Endpunkt-Multiplexierung
Procédé et dispositif pour la mise en oeuvre du multiplexage en point limite USB

(30) Priority: 14.01.2009 CN 200910001937
(43) Date of publication of application: 28.07.2010
(73) Proprietor: HUAWEI DEVICE CO., LTD, Shenzhen, Guangdong 518129 (CN)
(72) Inventor: Han, Yubin, 518129, Shenzhen Guangdong (CN)
(74) Representative: Körber, Martin Hans

(56) References cited:
- EP-A1- 1 126 378
- US-A1- 2003 041 205
- US-A1- 2004 133 708
- US-A1- 2004 205 280
- US-A1- 2005 080 966
- US-A1- 2005 120 157
- US-A1- 2007 174 533
- US-A1- 2007 255 877
- US-B1- 6 230 226
- US-B1- 6 928 505

## Description

The present disclosure relates to the field of communication, and particularly to a method and device for implementing USB endpoint multiplexing.

### BACKGROUND OF THE DISCLOSURE

With the rapid development of the computer technique, universal serial bus (USB) devices are widely used by users due to the advantages such as flexible access and mobility.

When a personal computer (PC) communicates with a USB device, the communication with a driver program on the PC is carried out through a USB endpoint in the USB device.

At present, the USB device supports two sets of USB endpoints: one set of control endpoints for communication control, and one set of data endpoints for data communication, such as functional devices like USB mouse and USB keyboard.

Users have higher and higher requirements on the performance of USB device, and one USB device is required to support multiple functions, i.e. to be used as a multi-functional device. Currently, one USB device can be added with several sets of USB endpoints, each set independently supporting corresponding functional device, so that the one USB device supports multiple functions.

During the implementation of the present disclosure, the inventor finds that:

As the USB device is restricted by hardware, the number of the supportable USB endpoints is very limited, and thus the hardware deficiency affects the integrity and abundance of the functions of the USB device. If the requirement of implementing multi-functions of multi-function device is satisfied by increasing the number of the USB endpoints in the hardware of the USB device, the complexity and cost for implementing the hardware of the USB device will be greatly increased.

EP 1126378 A1 discloses a mobile device which has a USB transmitter-receiver having one or more interfaces formed by one or more endpoint for exchanging information via the USB, one or more logical devices performing the exchanging of information with a host computer via the USB transmitter-receiver, and a controller which, when a function of one or more logical devices is used, selects as many interfaces as required for the exchange of information between the logical device and the host computer from the one or more interfaces within the USB transmitter-receiver.

### SUMMARY OF THE DISCLOSURE

Embodiments of the present disclosure provide a method and device for implementing USB endpoint multiplexing to solve the problem that one set of USB endpoints of the USB device cannot correspond to multiple USB functional devices. The solution is described as follows:

One embodiment of the present disclosure provides a method for implementing USB endpoint multiplexing, where a USB device supports at least two USB functional devices, and the number of the USB functional devices that are supported by the USB device is larger than the number of data endpoints of the USB device. The method includes: receiving a request for switching over USB functional devices through a data endpoint of the USB device, and sending the request to a control endpoint of the USB device, where the request carries a function identifier of a USB functional device selected by a user; searching for the USB functional device corresponding to the function identifier according to the function identifier; and switching the USB device to the found USB functional device.

Another embodiment of the present disclosure provides a USB device that supports at least two USB functional devices, where the number of the USB functional devices that are supported by the USB device is larger than the number of data endpoints of the USB device. The USB device includes: a receiving module which includes a receiving unit configured to receive a request for switching over USB functional devices through a data endpoint of the USB device, and send the request to a control endpoint of the USB device, where the request carries a function identifier of a USB functional device selected by a user; a searching module configured to search for the USB functional device corresponding to the function identifier carried in the request received by the receiving module according to the function identifier; and a switching module configured to switch the USB device to the USB functional device found by the searching module.

Still another embodiment of the present disclosure provides a host, including: an acquiring module configured to acquire a USB functional device selected by a user, and search for a function identifier corresponding to the acquired USB functional device according to the USB functional device; and a sending module configured to send a request for switching over USB functional devices to the USB device through a data endpoint of the USB device so that the request is sent to a control endpoint of the USB device, where the request carries the function identifier of the USB functional device selected by the user.

The beneficial effects produced by the technical solutions provided in the embodiments of the present disclosure are as follows:

In the case of limited USB chip endpoints, the object of taking one USB device as a multi-functional device is achieved by multiplexing the USB endpoints, thus the hardware cost of the USB device is saved, the compatibility of the USB device is improved, and the user can implement multiple functions with just one USB device, so as to enhance the user's experience.

### BRIEF DESCRIPTION OF THE DRAWINGS

The drawings described herein are provided for further understanding the present disclosure, which constitute a part of the present application, instead of restriction to the present disclosure. Among the drawings:
Fig. 1 is a flowchart diagram of a method according to Embodiment 1 of the present disclosure;
Fig. 2 is a connection diagram between a USB device and a host according to Embodiment 2 of the present disclosure;
Fig. 3 is a flowchart diagram of a method according to Embodiment 2 of the present disclosure;
Fig. 4 is a configuration diagram of a USB device according to Embodiment 3 of the present disclosure; and
Fig. 5 is a configuration diagram of a host according to Embodiment 4 of the present disclosure.

### DETAILED DESCRIPTION OF THE DISCLOSURE

The embodiments of the present disclosure are detailed described as follows with reference to the drawings, in order to clarify objects, technical solutions and advantages of the embodiments of the present disclosure.

### Embodiment 1

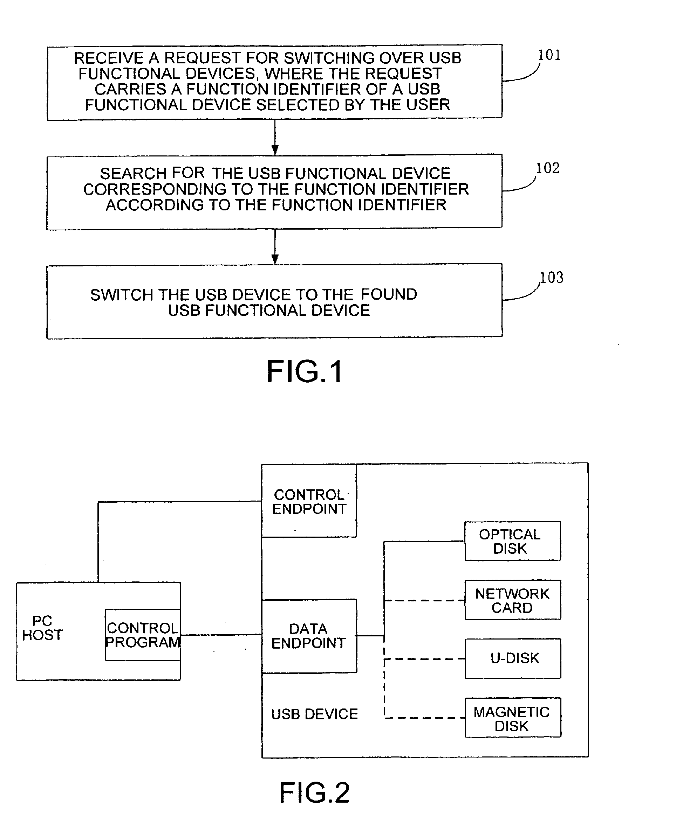

In order to enable a USB device to implement multiple functions, so as to save the hardware cost, the embodiment of the present disclosure provides a method for implementing USB endpoint multiplexing. The USB device supports at least two USB functional devices, and the number of the USB functional devices that are supported by the USB device is larger than the number of data endpoints of the USB device. The method is described with reference to Fig. 1 as follows.

In step 101, a request for switching over USB functional devices is received. The request carries a function identifier of a USB functional device selected by the user.

In step 102, the USB functional device corresponding to the function identifier is searched for according to the function identifier.

In step 103, the USB device is switched to the found USB functional device.

Through the above steps in the method according to the embodiment of the present disclosure, the USB device receives the request for switching over the USB functional devices, switches over the supported USB functional devices, and achieves the object of using one USB device as a multi-functional device.

The USB functional device corresponding to the function identifier is searched for according to the function identifier by enumerating the USB functional devices that are supported by the USB device, and searching for the USB functional device corresponding to the function identifier according to the function identifier.

The USB device is switched to the found USB functional device by the control endpoint of the USB device sending a switching command to the data endpoint of the USB device, and the data endpoint receiving the switching command, and switching the USB device to the found USB functional device, so that the host can perform a data communication with the USB functional device through the data endpoint.

The request for switching over the USB functional devices is received through the control endpoint of the USB device, as example not covered by the invention, by receiving the request for switching over the USB functional devices through the control endpoint of the USB device, or, according to the invention, by the data endpoint of the USB device receiving the request for switching over the USB functional devices and sending the request to the control endpoint of the USB device, and the control endpoint receiving the request for switching over the USB functional devices sent by the data endpoint.

According to the above method in accordance with the embodiment of the present disclosure, in the case of limited USB chip endpoints, the object of taking one USB device as a multi-functional device is achieved by multiplexing the USB endpoint, thus the hardware cost of the USB device is saved, the compatibility of the USB device is improved, and the user can implement multiple functions with just one USB device, so as to enhance the user's experience.

### Embodiment 2

In order to enable a USB device to implement multiple functions, so as to save the hardware cost, the embodiment of the present disclosure provides a method for implementing USB endpoint multiplexing. With reference to Fig. 2, the embodiment of the present disclosure is described by taking an example in which the USB device has two sets of endpoints: one set of endpoints are control endpoints, and the other set of endpoints are data endpoints connected to multiple functional devices (optical disk, network card, U-disk and magnetic disk).

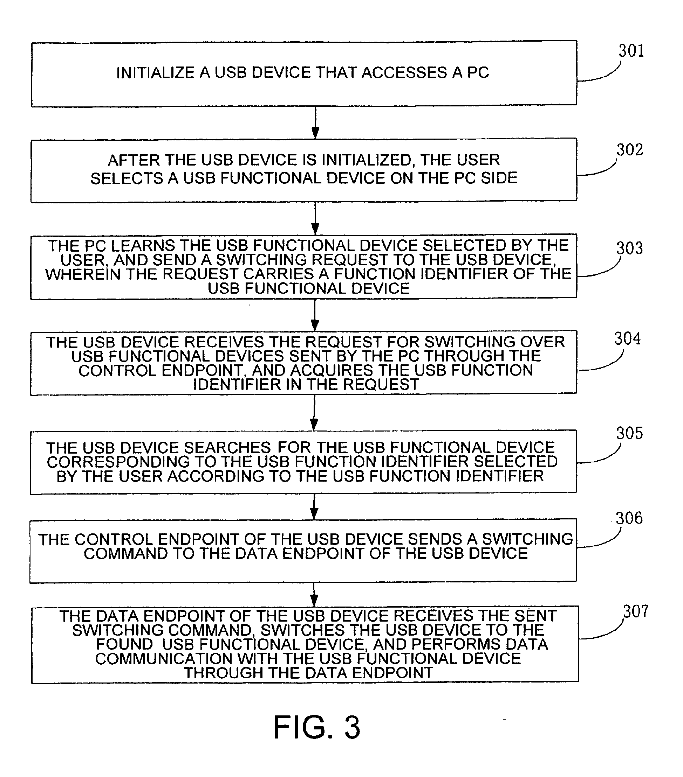

In order to support the endpoint multiplexing function of the USB device, firstly, drivers on the PC side and drivers on the USB device side shall both support the endpoint switching function. On the PC side is the selection of a specific USB device, and on the USB device side is the processing of different logics. The method is described as follows with reference to Fig. 3.

In step 301, a USB device that accesses the PC is initialized.

When the USB device accesses the PC for the first time, a defaulted functional device is available, e.g., the defaulted functional device of the USB device may be an optical disk, a U-disk, or other device, and this may be selected flexibly upon need of the user; however, with respect to a certain USB device, the defaulted functional device is fixed, and if the user wants to change later, the defaulted functional device of the USB device shall be reset.

When the USB device accesses the PC for the first time, the USB device automatically runs and installs a control program of the defaulted functional device and performs an initializing process, according to the defaulted functional device; e.g., if the defaulted functional device of the USB device is a U-disk, then the control endpoint of the USB device carries out an interaction with the PC and informs the PC that the USB device is a U-disk, when the USB device accesses the PC for the first time; when the interaction succeeds, i.e., the PC has recognized the U disk function of the USB device, the data endpoint of the USB device can perform a data communication with the PC through the U disk function.

In step 302, after the USB device is initialized, the user selects a USB functional device on the PC side.

The control program of the defaulted functional device of the USB device will automatically run after being installed. At that time, if the functional device selected by the user is just the defaulted functional device of the USB device, then the user can directly use the USB device, and perform a data communication with the PC through the data endpoint of the USB device.

If the functional device selected by the user is not the defaulted functional device of the USB device, then the user can, upon his or her need, use a control means on the PC side to select a corresponding functional device of the USB device, and the control tool uses a method of Input and Output Control

(IOCTL) to input the functional device of the USB device selected by the user. The control tool may be an input device in any form, such as keyboard and speech recognition device, and the input device is generally connected to the PC or is a part of the PC.

In the above steps 301 to 302, the USB device is firstly initialized, and after that, the user selects a USB functional device on the PC side; in addition, when the USB device accesses the PC for the first time, an interface displaying all functional devices that are supported by the USB device may also be provided on the PC side, and the user can directly select the required USB functional device on the interface.

In step 303, the PC acquires the USB functional device selected by the user, and sends a switching request to the USB device. The request carries a function identifier of the USB functional device;

In the PC and the USB device, each functional device of the USB device has a corresponding function identifier; referring to Fig. 1, e.g., the function identifier corresponding to the U-disk is 1, the function identifier corresponding to the optical disk is 2. The function identifier of the USB functional device carried by the request further includes a parameter enumerating the device as the USB functional device selected by the user, i.e., a parameter of the specific USB functional device corresponding to the function identifier.

**Table 1**

| Functional Device | Function identifier |
|---|---|
| U-Disk | 1 |
| Optical Disk | 2 |
| USB network card | 3 |
| USB camera | 4 |
| ... | ... |

The PC acquires the functional device selected by the user from the control means (e.g., a keyboard), searches for the function identifier corresponding to the functional device selected by the user, and sends a device switching request to the USB device; the request contains an instruction for switching the USB device to the functional device selected by the user, and carries the function identifier of the functional device selected by the user. As shown in Table 1, when the PC acquires that the user selects the optical disk from the control means, it finds that the function identifier corresponding to the optical disk is 2, and sends to the USB device a request for switching to the optical disk, where the request carries the function identifier 2 of the optical disk.

In step 304, through the control endpoint, the USB device receives the request for switching over the USB functional devices sent by the PC, and acquires the USB function identifier in the request.

The control endpoint of the USB device acquires the carried function identifier from the received request for switching over the USB functional devices, and parameters of the functional device corresponding to the function identifier.

In step 305, the USB device searches for the USB functional device corresponding to the USB function identifier selected by the user according to the USB function identifier.

After acquiring the function identifier selected by the user, the control endpoint of the USB device enumerates all USB functional devices that are supported by the USB device, according to the parameters of the USB functional device selected by the user in the function identifier, and searches for the corresponding USB functional device according to the function identifier. As shown in Table 1, based on the acquired function identifier 2, the control endpoint of the USB device finds that the USB functional device corresponding to the function identifier 2 is an optical disk, by enumerating all USB functional devices that are supported by the USB device.

In addition, if the functional device selected by the user is not supported by the USB device, i.e., a corresponding USB functional device cannot be found according to the function identifier of the USB functional device selected by the user, then the USB device returns a failure response to the PC, and the user cannot use the USB device to perform the selected function.

In step 306, the control endpoint of the USB device sends a switching command to the data endpoint of the USB device.

The data endpoint of the USB device is connected to multiple functional device interfaces; after finding the USB functional device corresponding to the function identifier, the control endpoint sends the switching command to the data endpoint of the USB device, and informs the data endpoint to switch to the USB functional device, i.e., the functional device selected by the user. As shown in Table 1, when the control endpoint of the USB device finds that the USB functional device corresponding to the function identifier 2 is an optical disk, then it instructs the data endpoint to switch to the optical disk.

In step 307, the data endpoint of the USB device receives the switching command sent by the control endpoint, switches the USB device to the found USB functional device, and performs a data communication with the USB functional device through the data endpoint.

The data endpoint of the USB device receives the switching command, and switches the USB device to the searched USB functional device according to the switching command; after being switched, the USB device becomes the functional device selected by the user, and returns a success response to the PC; after receiving the response, the user knows that the selected functional device can be used to perform a data communication with the PC, the process of which is same as the communication process between the PC and a common USB device, and herein is not described.

Besides, in steps 304 to 307, as example not covered by the invention, the control endpoint of the USB device receives the switching request sent by the PC, and performs the functional switch of the USB device through the data endpoint of the USB device. Alternatively, according to the invention, the data endpoint of the USB device can also directly receive the switching request sent by the PC, and then send the switching request to the control endpoint of the USB device, which in turn performs steps 304 to 307.

When receiving a new switching request sent by the PC, the USB device disconnects the current functional device, acquires new function identifier according to the newly received switching request, and enumerates again all USB functional devices according to the new function identifier, so as to switch the USB device to a new functional device. The process is the same as steps 304 to 307, and herein is not described.

The embodiment of the present disclosure describes the method by taking an example in which the USB device has two sets of endpoints: one set of control endpoints, and one set of data endpoints. The embodiment of the present disclosure is also adaptable to the case where the USB device has more than two sets of endpoints, and in this case, a certain set of endpoints can be used independently and other endpoints can be multiplexed, or all the endpoints are multiplexed, according to the actual need. The processes are similar, and herein are not described.

In addition, when the USB endpoint of the USB device in the embodiment of the present disclosure supports multiple storage functions, such as U-disk and optical disk, if there are multiple storage devices in the USB device, each storage device can be used a storage device corresponding to one of the storage functions, according to the actual request; e.g., data of the U-disk is stored in a storage device 1 of the USB device, and data of the optical disk is stored in a storage device 2 of the USB device. If the USB device has only one storage device, but the USB device still supports multiple storage functions, the storage device will be divided into several sections, each section used as a storage device corresponding to a storage function; e.g., data of the U disk is stored in section 1 of the storage device, and data of the optical disk is stored in section 2 of the storage device.

The method according to the embodiment of the present disclosure coordinates the drivers on the PC side and the USB device side, again enumerates the functional devices of the USB device to multiplex the USB endpoints, so that the USB device can switch over different functional devices, hence multiple functions are supported by the USB device, the hardware cost of the USB device is saved, the compatibility of the USB device is improved, and the user's experience is enhanced.

### Embodiment 3

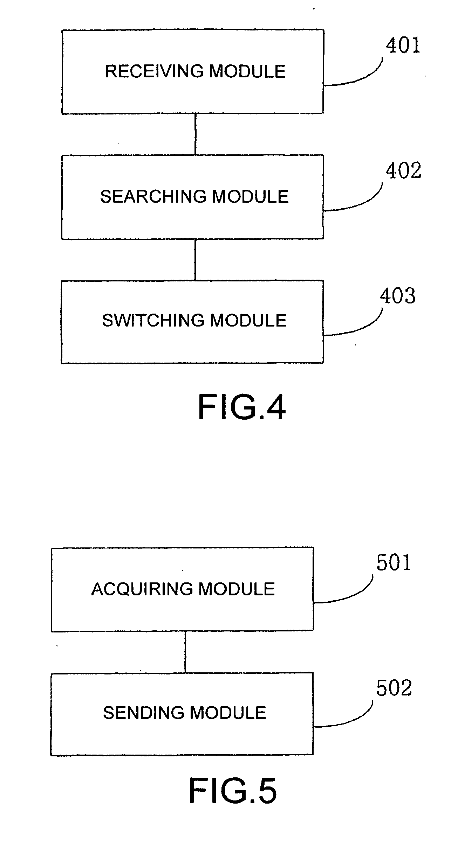

The embodiment of the present disclosure provides a device for implementing USB endpoint multiplexing. In the embodiment of the present disclosure, the USB device supports at least two USB functional devices, and the number of the USB functional devices that are supported by the USB device is larger than the number of data endpoints of the USB device. With reference to Fig. 4, the device includes: a receiving module 401 configured to receive a request for switching over USB functional devices, where the request carries a function identifier of a USB functional device selected by the user; a searching module 402 configured to search for the USB functional device corresponding to the function identifier carried in the request received by the receiving module 401, according to the function identifier; and a switching module 403 configured to switch the USB device to the USB functional device searched by the searching module 402.

The USB device according to the embodiment of the present disclosure receives the request for switching over USB functional devices, switches among the supported USB functional devices, and achieves the object of using one USB device as a multi-functional device.

The searching module 402 includes: an enumerating unit configured to enumerate USB functional devices that are supported by the USB device; and a searching unit configured to search for the USB functional device corresponding to a function identifier acquired by an acquiring unit according to the function identifier.

The switching module 403 includes: a sending unit configured to send a switching command to the data endpoint of the USB device through the control endpoint of the USB device; and a switching unit configured to switch the USB device to the USB functional device found by the searching unit when the data endpoint receives the switching command sent by the sending unit, so that the host can perform a data communication with the USB functional device through the data endpoint.

The receiving module 401 includes: as example not covered by the invention, a first receiving unit configured to receive the request for switching over USB functional devices through the control endpoint of the USB device; or, according to the invention, a second receiving unit configured to receive the request for switching over the USB functional devices through the data endpoint of the USB device, and send the request to the control endpoint of the USB device; the control endpoint receives the request for switching over the USB functional devices sent by the data endpoint of the USB device.

The device according to the embodiment of the present disclosure coordinates the drivers on the PC side and the USB device side, again enumerates the functional devices of the USB device to multiplex the USB endpoints, so that the USB device can switch among different functional devices, hence the multiple functional devices are supported at limited endpoints, the hardware cost of the USB device is saved, the compatibility of the USB device is improved, and the user's experience is enhanced.

### Embodiment 4

The embodiment of the present disclosure provides a host, referring to Fig. 5. The host includes: an acquiring module 501 configured to acquire information of a USB functional device, and search for a function identifier corresponding to the USB functional device according to the acquired information of the USB functional device, where the information of the USB functional device may be acquired by being inputted to the host by the user, e.g. in a way of clicking the icon of a corresponding USB functional device, or entering the full name or short name of a corresponding USB functional device, which is not described in detail; and a sending module 502 configured to send a request for switching over USB functional devices to the USB device, where the request carries a function identifier of a USB functional device selected by the user.

The host according to the embodiment of the present disclosure coordinates the driver on the USB device side, acquires the USB functional device acquired by the user, and sends the request for switching over the USB functional devices to the USB device, so that the USB device can switch among different functional devices, hence the multiple functional devices are supported by limited endpoints, the hardware cost of the USB device is saved, the compatibility of the USB device is improved, and the user's experience is enhanced.

The embodiments of the present disclosure can be implemented with software, and corresponding software programs can be stored in readable storage media, such as a hard disk of router, buffer or optical disk.

The above description is just directed to the exemplary embodiments of the present disclosure, and is not intended to limit the present disclosure. Any modification, equivalent substitution or improvement without deviating from the principle shall be covered by the protection scope of the present disclosure.

## Claims

1. A method for implementing universal serial bus, USB, endpoint multiplexing, wherein a USB device supports at least two USB functional devices, and the number of the USB functional devices that are supported by the USB device is larger than the number of data endpoints of the USB device, **characterized by** comprising:
receiving a request for switching over USB functional devices through a data endpoint of the USB device, and sending the request to a control endpoint of the USB device, wherein the request carries a function identifier of a USB functional device selected by a user (101);
searching for the USB functional device corresponding to the function identifier according to the function identifier (102); and
switching the USB device to the found USB functional device (103).

2. The method according to claim 1, wherein searching for the USB functional device corresponding to the function identifier according to the function identifier comprises:
enumerating the USB functional devices that are supported by the USB device, and searching for the USB functional device corresponding to the function identifier according to the function identifier.

3. The method according to claim 1, wherein switching the USB device to the found USB functional device comprises:
sending a switching command to a data endpoint of the USB device by a control endpoint of the USB device (306); and
receiving the switching command by the data endpoint, and switching the USB device to the found USB functional device, so that a host can perform a data communication with the USB functional device through the data endpoint (307).

4. A universal serial bus, USB, device capable of supporting at least two USB functional devices, wherein the number of the USB functional devices that are supported by the USB device is larger than the number of data endpoints of the USB device, **characterized by** comprising:
a receiving module (401) which comprises a receiving unit configured to receive a request for switching over USB functional devices through the data endpoint of the USB device, and send the request to a control endpoint of the USB device, wherein the request carries a function identifier of a USB functional device selected by a user;
a searching module (402) configured to search for the USB functional device corresponding to the function identifier carried in the request received by the receiving unit according to the function identifier; and
a switching module (403) configured to switch the USB device to the USB functional device found by the searching module.

5. The USB device according to claim 4, wherein the searching module comprises:
an enumerating unit configured to enumerate the USB functional devices that are supported by the USB device; and
a searching unit configured to search for the USB functional device corresponding to the function identifier received by the receiving unit according to the function identifier and the USB functional devices enumerated by the enumerating unit.

6. The USB device according to claim 4, wherein the switching module comprises:
a sending unit configured to send a switching command to the data endpoint of the USB device through the control endpoint of the USB device; and
a switching unit configured to switch the USB device to the USB functional device found by the searching unit when the switching command sent by the sending unit is received through the data endpoint, so that a host can perform a data communication with the USB functional device through the data endpoint.

7. A host **characterized by** comprising:
an acquiring module (501) configured to acquire information of a universal serial bus, USB, functional device, and search for a function identifier corresponding to the acquired USB functional device, according to the information of the USB functional device; and
a sending module (502) configured to send a request for switching over USB functional devices to the USB device through a data endpoint of the USB device so that the request is sent to the control endpoint of the USB device, wherein the request carries the function identifier.

## Patentansprüche

1. Verfahren zum Implementieren des Endpunktmultiplexens des Universal Serial Bus USB, wobei eine USB-Einrichtung mindestens zwei USB-Funktionseinrichtungen unterstützt und die Anzahl der USB-Funktionseinrichtungen, die durch die USB-Einrichtung unterstützt werden, größer als die Anzahl von Datenendpunkten der USB-Einrichtung ist, **dadurch gekennzeichnet, dass** es die folgenden Schritte umfasst:
Empfangen einer Anforderung zum Umschalten von USB-Funktionseinrichtungen durch einen Datenendpunkt der USB-Einrichtung und Senden der Anforderung zu einem Steuerendpunkt der USB-Einrichtung, wobei die Anforderung eine Funktionskennung einer USB-Funktionseinrichtung führt, die durch einen Benutzer ausgewählt wird (101);
Suchen nach der USB-Funktionseinrichtung, die der Funktionskennung entspricht, gemäß der Funktionskennung (102); und
Schalten der USB-Einrichtung auf die gefundene USB-Funktionseinrichtung (103).

2. Verfahren nach Anspruch 1, wobei das Suchen nach der USB-Funktionseinrichtung, die der Funktionskennung entspricht, gemäß der Funktionskennung Folgendes umfasst:
Aufzählen der USB-Funktionseinrichtungen, die durch die USB-Einrichtung unterstützt werden, und Suchen nach der USB-Funktionseinrichtung, die der Funktionskennung entspricht, gemäß der Funktionskennung.

3. Verfahren nach Anspruch 1, wobei das Schalten der USB-Einrichtung auf die gefundene USB-Funktionseinrichtung Folgendes umfasst:
Senden eines Schaltbefehls zu einem Datenendpunkt der USB-Einrichtung durch einen Steuerendpunkt der USB-Einrichtung (306); und
Empfangen des Schaltbefehls durch den Datenendpunkt und Schalten der USB-Einrichtung auf die gefundene USB-Funktionseinrichtung, so dass ein Host eine Datenkommunikation mit der USB-Funktionseinrichtung durch den Datenendpunkt durchführen kann (307).

4. Einrichtung des Universal Serial Bus USB mit der Fähigkeit zum Unterstützen von mindestens zwei USB-Funktionseinrichtungen, wobei die Anzahl der USB-Funktionseinrichtungen, die durch die USB-Einrichtung unterstützt werden, größer als die Anzahl von Datenendpunkten der USB-Einrichtung ist, **dadurch gekennzeichnet, dass** sie Folgendes umfasst:
ein Empfangsmodul (401), das eine Empfangseinheit umfasst, die dafür ausgelegt ist, eine Anforderung zum Umschalten von USB-Funktionseinrichtungen durch den Datenendpunkt der USB-Einrichtung zu empfangen und die Anforderung zu einem Steuerendpunkt der USB-Einrichtung zu senden, wobei die Anforderung eine Funktionskennung einer USB-Funktionseinrichtung führt, die von einem Benutzer ausgewählt wird;
ein Suchmodul (402), das dafür ausgelegt ist, nach der USB-Funktionseinrichtung, die der in der durch die Empfangseinheit empfangenen Anforderung geführten Funktionskennung entspricht, gemäß der Funktionskennung zu suchen; und
ein Schaltmodul (403), das dafür ausgelegt ist, die USB-Einrichtung auf die durch das Suchmodul gefundene USB-Funktionseinrichtung zu schalten.

5. USB-Einrichtung nach Anspruch 4, wobei das Suchmodul Folgendes umfasst:
eine Aufzählungseinheit, die dafür ausgelegt ist, die USB-Funktionseinrichtungen, die durch die USB-Einrichtung unterstützt werden, aufzuzählen; und
eine Sucheinheit, die dafür ausgelegt ist, nach der USB-Funktionseinrichtung, die der durch die Empfangseinheit empfangenen Funktionskennung entspricht, gemäß der Funktionskennung und den durch die Aufzählungseinheit aufgezählten USB-Funktionseinrichtungen zu suchen.

6. USB-Einrichtung nach Anspruch 4, wobei das Schaltmodul Folgendes umfasst:
eine Sendeeinheit, die dafür ausgelegt ist, einen Schaltbefehl zu dem Datenendpunkt der USB-Einrichtung durch den Steuerendpunkt der USB-Einrichtung zu senden; und
eine Schalteinheit, die dafür ausgelegt ist, die USB-Einrichtung auf die durch die Sucheinheit gefundene USB-Funktionseinrichtung zu schalten, wenn der durch die Sendeinheit gesendete Schaltbefehl durch den Datenendpunkt empfangen wird, so dass ein Host eine Datenkommunikation mit der USB-Funktionseinrichtung durch den Datenendpunkt durchführen kann.

7. Host, **dadurch gekennzeichnet, dass** er Folgendes umfasst:
ein Beschaffungsmodul (501), das dafür ausgelegt ist, Informationen einer Funktionseinrichtung des Universal Serial Bus USB zu beschaffen und gemäß den Informationen der USB-Funktionseinrichtung nach einer Funktionskennung zu suchen, die der beschafften USB-Funktionseinrichtung entspricht; und
ein Sendemodul (502), das dafür ausgelegt ist, eine Anforderung zum Umschalten von USB-Funktionseinrichtungen durch einen Datenendpunkt der USB-Einrichtung zu der USB-Einrichtung zu senden, so dass die Anforderung zu dem Steuerendpunkt der USB-Einrichtung gesendet wird, wobei die Anforderung die Funktionskennung führt.

## Revendications

1. Procédé de mise en oeuvre d'un multiplexage de points de terminaison de bus série universel, USB, un dispositif USB prenant en charge au moins deux dispositifs fonctionnels USB, et le nombre des dispositifs fonctionnels USB pris en charge par le dispositif USB étant supérieur au nombre de points de terminaison de données du dispositif USB, **caractérisé en ce qu'**il comprend les étapes consistant à :
recevoir une demande de commutation sur des dispositifs fonctionnels USB par l'intermédiaire d'un point de terminaison de données du dispositif USB, et transmettre la demande à un point de terminaison de commande du dispositif USB, la demande contenant un identifiant de fonction d'un dispositif fonctionnel USB sélectionné par un utilisateur (101) ;
rechercher le dispositif fonctionnel USB correspondant à l'identifiant de fonction compte tenu de l'identifiant de fonction (102) ; et
commuter le dispositif USB sur le dispositif fonctionnel USB trouvé (103).

2. Procédé selon la revendication 1, l'étape consistant à rechercher le dispositif fonctionnel USB correspondant à l'identifiant de fonction compte tenu de l'identifiant de fonction comprenant l'étape consistant à :
recenser les dispositifs fonctionnels USB pris en charge par le dispositif USB, et rechercher le dispositif fonctionnel USB correspondant à l'identifiant de fonction compte tenu de l'identifiant de fonction.

3. Procédé selon la revendication 1, l'étape consistant à commuter le dispositif USB sur le dispositif fonctionnel USB trouvé comprenant les étapes consistant à :
transmettre une instruction de commutation à un point de terminaison de données du dispositif USB par un point de terminaison de commande du dispositif USB (306) ; et
recevoir l'instruction de commutation par le point de terminaison de données, et commuter le dispositif USB sur le dispositif fonctionnel USB trouvé pour permettre ainsi à un hôte de réaliser une communication de données avec le dispositif fonctionnel USB par l'intermédiaire du point de terminaison de données (307).

4. Dispositif bus série universel, USB, apte à prendre en charge au moins deux dispositifs fonctionnels USB, le nombre des dispositifs fonctionnels USB pris en charge par le dispositif USB étant supérieur au nombre de points de terminaison de données du dispositifs USB, **caractérisé en ce qu'**il comprend :
un module de réception (401) comprenant une unité de réception conçue pour recevoir une demande de commutation sur des dispositifs fonctionnels USB par l'intermédiaire du point de terminaison de données du dispositif USB, et transmettre la demande à un point de terminaison de commande du dispositif USB, la demande contenant un identifiant de fonction d'un dispositif fonctionnel USB sélectionné par un utilisateur ;
un module de recherche (402) conçu pour rechercher le dispositif fonctionnel USB correspondant à l'identifiant de fonction contenu dans la demande reçue par l'unité de réception compte tenu de l'identifiant de fonction ; et
un module de commutation (403) conçu pour commuter le dispositif USB sur le dispositif fonctionnel USB trouvé par le module de recherche.

5. Dispositif USB selon la revendication 4, le module de recherche comprenant :
une unité de recensement conçue pour recenser les dispositifs fonctionnels USB pris en charge par le dispositif USB ; et
une unité de recherche conçue pour rechercher le dispositif fonctionnel USB correspondant à l'identifiant de fonction reçu par l'unité de réception compte tenu de l'identifiant de fonction et des dispositifs fonctionnels USB recensés par l'unité de recensement.

6. Dispositif USB selon la revendication 4, le module de commutation comprenant :
une unité de transmission conçue pour transmettre une instruction de commutation au point de terminaison de données du dispositif USB par l'intermédiaire du point de terminaison de commande du dispositif USB ; et
une unité de commutation conçue pour commuter le dispositif USB sur le dispositif fonctionnel USB trouvé par l'unité de recherche lors de la réception de l'instruction de commutation transmise par l'unité de transmission par l'intermédiaire du point de terminaison de données pour permettre ainsi à un hôte de réaliser une communication de données avec le dispositif fonctionnel USB par l'intermédiaire du point de terminaison de données.

7. Hôte, **caractérisé en ce qu'**il comprend :
un module d'acquisition (501) conçu pour acquérir des informations sur un dispositif fonctionnel bus série universel, USB, et rechercher un identifiant de fonction correspondant au dispositif fonctionnel USB acquis compte tenu des informations sur le dispositif fonctionnel USB ; et
un module de transmission (502) conçu pour transmettre au dispositif USB une demande de commutation sur des dispositifs fonctionnels USB par l'intermédiaire d'un point de terminaison de données du dispositif USB de manière à transmettre la demande au point de terminaison de commande du dispositif USB, la demande contenant l'identifiant de fonction.
